# EUROPÄISCHE PATENTSCHRIFT

(11) **EP 3 540 885 B1**
(45) Veröffentlichungstag und Bekanntmachung des Hinweises auf die Patenterteilung: **20.04.2022**
(21) Anmeldenummer: 19161649.9
(22) Anmeldetag: 08.03.2019
(51) Int. Cl.: H02G 3/08

(54) **INSTALLATIONSDOSE**
INSTALLATION BOX
BOÎTE D'INSTALLATION

(30) Priorität: 14.03.2018 DE 102018105944
(43) Veröffentlichungstag der Anmeldung: 18.09.2019
(73) Patentinhaber: Kaiser GmbH & Co. KG, 58579 Schalksmühle (DE)
(72) Erfinder: VIOLA, Marc, 58339 Breckerfeld (DE); RÜTHER, Andreas, 58511 Lüdenscheid (DE)
(74) Vertreter: Rentsch Partner AG

(56) Entgegenhaltungen:
- EP-A1- 1 489 713
- EP-A1- 1 842 271
- EP-A1- 2 940 815
- EP-A2- 2 360 800
- DE-C- 611 474
- DE-U- 1 822 154
- FR-A1- 3 011 139
- US-A1- 2005 072 590
- US-A1- 2006 042 813
- Annonymous: "NOUVEAU BOÎTES D'ENCASTREMENT ÉTANCHES À L'AIR POUR CLOISONS CREUSES", , 20 October 2017 (2017-10-20), XP055696198, Retrieved from the Internet: URL:https://www.bticino.be/sites/default/f iles/brochures/brochure_luchtdichte_inbouw dozen_holle_wanden_FR_v2.pdf [retrieved on 2020-05-18]
- Anonymous: "Catalogue Bâtiment Habitat et tertiaire", BLM, 1 January 2017 (2017-01-01), pages 1-48, XP055756970, Retrieved from the Internet: URL:https://www.blmd.fr [retrieved on 2020-12-07]

## Beschreibung

### TECHNISCHES GEBIET

Die Erfindung betrifft eine Installationsdose für elektrotechnische Zwecke, insbesondere zur Aufnahme von elektrischen Teilen wie Schaltern, Steckdosen, Lampen oder ähnliches.

### HINTERGRUND DER ERFINDUNG

Um elektrische Schalter, Steckdosen, Lampen, Apparate, etc. an den dazu vorgesehenen Stellen in einem Gebäude eines Bauwerkes anbringen zu können, werden unter anderem Installationsdosen verwendet. Unter solchen Installationsdosen werden beispielsweise Unterputzdosen, Einlasskästen, Unterputzabzweigdosen, Verteilerdosen und dergleichen verstanden. Die Installationsdosen weisen typischerweise einen zylinder- oder quaderförmigen Dosenkörper mit einem Dosenboden und einer daran anschliessenden Dosenwand auf und umfassen einen über eine Installationsöffnung zugänglichen Installationsraum. Umfangsseitig in der Dosenwand und/oder dem Dosenboden, bzw. in einem Übergangsbereich zwischen Dosenboden und Dosenwand weist der Dosenkörper zudem mehrere Rohreinführungen auf, die eine Öffnung (Rohröffnung) zum Einführen eines Elektrorohres umfassen. Bei den hier zur Diskussion stehenden Installationsdosen sind die Rohröffnungen im Auslieferungszustand mit einer Membran aus weichelastischem Material überspannt, welche die Rohröffnung dichtend verschliesst. Während der Installation werden eine oder mehrere Membranen geöffnet, bzw. mit einem Werkzeug durchstossen, um ein Elektrorohr in den Installationsraum einzuführen.

Nachfolgend werden einige Dokumente aus dem Stand der Technik, welche solche Dosen zeigen, kurz erläutert:
US5125527A, publiziert am 30.06.1992 von Legrand SA, betrifft eine Gerätebox, für den Einbau in eine Wand, welche zumindest einen Zugang mit einem provisorischen Ausstosselement umfasst. Das Ausstosselement ist durch eine Linie von reduzierter Stärke begrenzt. Ein Zugelement ist an der Anwendung befestigt um eine Zugkraft aufzubringen.
US4961511, publiziert am 09.10.1991 von Kerlund und Rausing AB, offenbart einen Verschluss welcher durch Spritzguss hergestellt ist und eine Öffnungsvorrichtung mit einem Reissstreifen und einem Abziehring umfasst. Der Reissstreifen formt und definiert eine konkave Region.
EP1842271, publiziert am 10.10.2007 von Legrand SNC, betrifft ein Wandelement für eine dichte Kabeldurchführung, das insbesondere als Wandelement eines dichten Schaltgehäuses oder eines Rohrs verwendbar ist. Das Wandelement enthält eine steife Abdeckung in die eine Öffnung gebohrt ist und eine elastische Abdeckung. Die elastische Abdeckung enthält weiter eine innere Zone umrandet von einer ringförmigen Zerbrechlichkeitslinie und versehen mit einem Greiforgan. Das Greiforgan ermöglicht es, die Abdeckung entlang der Zerbrechlichkeitslinie abzulösen. Das Greiforgan wird von einer Zunge geformt, welche fest mit einem an der inneren Zone der elastischen Abdeckung haftenden steifen Ring verbunden ist.
FR3011139, publiziert am 27.03.2015 von Legrand SNC, offenbart eine Installationsbox, welche an einem Dosenboden und einer Dosenwand flexible Membranen zum Einführen von elektrischen Leitungen aufweist. Die Membranen weisen ferner je eine Öffnungshilfe auf, welches dazu dient einen Teil der Membran zu entfernen.
EP2940815, publiziert am 04.11.2015 von Legrand SNC, betrifft eine Elektrobox zur Montage in einer Wand, die eine Seitenwand und einen Boden aufweist, mit mindestens einer Durchgangsöffnung für elektrische Leiter. Die Durchgangsöffnungen sind mit Abdeckungen verschlossen und weisen eine Umfangsdichtung auf, welche an eine Aussenfläche der Seitenwand angespritzt ist.
DE202012005863, publiziert am 30.08.2012 von desselben Anmelderin wie die vorliegende Anmeldung, offenbart eine Installationsdose aus Kunststoff für elektrotechnische Installationen. Die Installationsdose weist einen Dosenkörper mit einem Boden und eine davon abragende, umlaufende Wandung mit mehreren Öffnungen auf. Auf die Wandung und/oder den Boden ist eine elastomere Kunststoffschicht aufgebracht, die sämtliche Öffnungen luftdicht verschließt und die mittels eines Werkzeuges, eines Kabels oder eines Anschlussmittels in deren Bereich durchstoßbar ist.
EP2360800A2 offenbart ein Installationsteil, insbesondere für elektrische Installationen, zum Einführen oder Durchführen mindestens eines Leerrohres, wobei das Installationsteil mindestens eine Wandung mit mindestens einem durch eine Sollbruchstelle umgrenzten Wandungsbereich aufweist, der durch Heraustrennen des Wandungsbereiches einen Einlass oder Durchlass für ein Leerrohr bildet, wobei der Wandungsbereich mindestens eine Eingriffskontur für ein Werkzeug, insbesondere die Klinge eines Schraubendrehers, zum Ausbrechen des Wandungsbereiches aufweist.

In den Katalog "NOUVEAU BOÎTES D'ENCASTREMENT ETANCHES À L'AIR POUR CLOISONS CREUSES" (2017-10-20) von Bticino und den Katalog "Catalogue Bätiment Habitat et tertiaire" (2017-01-01) von BLM werden weitere Installationsdosen veröffentlicht.

Installationsdosen des Standes der Technik haben oft den Nachteil, dass die Membranen keinen Öffnungsmechanismus aufweisen, bzw. oftmals schwer zu öffnen sind. Weiterhin neigen die aus dem Stand der Technik bekannten Membranen dazu, nach dem Öffnen beim Durchstecken des Elektrorohres unkontrolliert einzureissen, was zu undichten Installationen führt. Dies ist insbesondere aus energetischen Gründen unerwünscht, da über die Rohre Zugluft austreten kann.

### DARSTELLUNG DER ERFINDUNG

Eine Aufgabe der Erfindung besteht darin eine verbesserte Installationsdose für den Trockenbau mit einer dichten und einfach zu handhabenden Rohreinführung bereitzustellen.

Insbesondere im Trockenbau, sind Eigenschaften bei Rohreinführungen von Installationsdosen erwünscht, welche neben einer einfachen Handhabung, der verlässlichen Halterung von angeschlossenen Elektrorohren bzw. Kabelschutzschläuchen, auch eine gute Abdichtung des Installationsraumes der Installationsdose umfassen.

Wie bereits einführend erwähnt, sind aus dem Stand der Technik Installationsdosen bekannt, welche Rohreinführungen mit einer Membran umfassen. Diese Installationsdosen bestehen in der Regel aus zwei unterschiedlichen Materialkomponenten, nämlich einem Dosenkörper aus hartem Kunststoff mit einer oder mehreren Rohröffnungen, zum Einführen von Kabelschläuchen, etc. in den Installationsraum durch die Dosenwand und/oder den Dosenboden, bzw. den Übergangsbereich zwischen Dosenwand und Dosenboden. Die Rohröffnungen sind in der Regel grösser als der Durchmesser der Kabelschläuche und sind mit einer Membran aus einem anderen, weichelastischen Material überspannt. Diese Membranen sind dafür vorgesehen, dass sie mit einem Werkzeug durchstossen, bzw. geöffnet werden können um ein Elektrorohr hindurchzustecken, so dass die Membran danach dichtend an dem Elektrorohr anliegt.

Eine Installationsdose gemäss der Erfindung umfasst einen Dosenkörper aus einem harten Kunststoff, welcher einen Installationsraum zur Aufnahme von elektrischen Teilen wie Schaltern, Steckdosen, Lampen oder ähnliches umfasst. Der Dosenkörper weist einen Dosenboden und eine daran anschliessende Dosenwand auf, sowie eine dem Dosenboden gegenüberliegende Installationsöffnung, welche den Zugang zum Installationsraum des Dosenkörpers gewährleistet. In bestimmten Ausführungsformen kann der Dosenkörper weiter einen abgerundeten und/oder abgeflachten Übergangsbereich aufweisen, welcher zwischen dem Dosenboden und der Dosenwand angeordnet ist. Der Dosenkörper weist weiterhin mindestens eine Rohröffnung zum Einführen eines Elektrorohres oder Kabelschlauches in den Installationsraum auf. Diese ist im geschlossenen Zustand von einer erfindungsgemässen Membran aus elastischem Material überspannt.

Die Membran weist eine (radial) innere und eine zu dieser radial aussen orientierte äusseren Zone auf, welche die innere Zone umgibt. Die innere Zone ist zum Entfernen durch mechanisches Einwirken vorgesehen. Die äussere Zone ist in der Regel grösser ausgestaltet als der maximale Durchmesser des durchzusteckenden Rohres, bzw. Schlauches, sodass eine gewisse Richtungsflexibilität bezüglich der Ausrichtung des durchzusteckenden Rohres erreicht wird. Die Membran ist mit Vorteil an einem Rand der Rohröffnung umlaufend durch Mehrkomponenten-Spritzgiessen befestigt. Durch das Heraustrennen der inneren Zone der Membran aus der äusseren Zone entsteht eine flexible, dehnbare Einführungsöffnung zum Einführung von Elektrorohren oder Kabelschutzschläuchen mit unterschiedlichen Durchmessern in die Installationsdose. Die Einführungsöffnung kann sich flexibel an unterschiedliche Rohrdurchmesser anpassen. Sie ist infolge der sie umgebenden äusseren Zone bei Bedarf richtungsflexibel, d.h. es können Rohre, welche aus unterschiedlichen Richtung eintreffen, eingeführt werden. Weiterhin kann sie bei Bedarf auch einen seitlichen Versatz kompensieren.

Für das einfache Heraustrennen der inneren Zone ist zumindest bereichsweise eine entlang eines äusseren Randes der inneren Zone, zwischen der inneren und der äusseren Zone, umlaufende Dünnstelle vorgesehen. Die umlaufende Dünnstelle kann beispielsweise als eine Kerbe, bzw. Vertiefung mit einer V- oder U-Form, bzw. als eine materialtechnische Schwächung, welche z.B. durch Parameter des Herstellungsprozesses beeinflusst wird, ausgestaltet sein. Die Membran im Bereich der Dünnstelle kann eine konstante und/oder eine variable Dicke in Umfangsrichtung aufweisen. Weiterhin kann die Dünnstelle und/oder ein an sie angrenzender Bereich so ausgestaltet sein, dass beim Heraustrennen an einer oder mehreren Stellen eine Konzentration der anliegenden Kräfte auftritt, welche das Anreissen der Membran unterstützen. Dies kann z.B. durch eine oder mehrere zusätzliche Kerben, oder andere Elemente, welche zur Stresskonzentration dienen, erreicht werden.

Um nach dem Öffnen ein ungewolltes Einreissen der äusseren Zone beim Einführen eines Elektrorohres zu vermeiden, umfasst die äussere Zone mindestens eine um die innere Zone umlaufende Wulst, respektive eine lokale Verdickung.

Diese Wulst kann direkt entlang der Dünnstelle oder in einem gewissen Abstand dazu angeordnet sein, um eine Dichtlippe auszubilden, welche gegenüber dem Elektrorohr abdichtet. Weiterhin kann die äussere Zone der Membran unterschiedliche Materialdicken aufweisen.

Eine erfindungsgemässe Membran weist mit Vorteil auf der Dosenaussenseite eine an der inneren Zone angeformte, nach aussen vorstehende Abreisslasche auf, welche zum Heraustrennen der inneren Zone dient. Während die Abreisslasche auf der Dosenaussenseite angebracht ist, ist die Dünnstelle der Membran auf einer Innenseite der Membran angeordnet. Dies hat den Vorteil, dass die Dimensionierung der Dünnstelle losgelöst von der auf der Aussenseite angeformten Abreisslasche vorgenommen werden kann und damit deutlich einfacher einstellbar ist. Mindestens eine umlaufende Wulst ist auf der Membraninnenseite angeordnet. Weiterhin kann die innere Zone der Membran innen und/oder aussen angeordnete Versteifungsrippen aufweisen, welche bei Bedarf mit der Abreisslasche gekoppelt sind und die zum Heraustrennen der inneren Zone über die Abreisslasche eingeleiteten Kräfte so verteilen, dass die innere Zone wie vorgesehen herausgetrennt werden kann. Indem die Dünnstelle auf der Innenseite der Dose (innen) angeordnet ist, kann diese einfach in Entformungsrichtung der Doseninnenseite angeordnet werden, während die Abreisslasche auf der Aussenseite (aussen) eine andere Richtung aufweisen kann. Nachteilige Hinterschnitte, welche zudem schwierig oder gar nicht zu entformen sind, können dadurch vermieden werden.

Die Abreisslasche ist mit Vorteil an die innere Zone angeformt und besteht aus dem gleichen weichelastischen Material wie die Membran. Dies bewirkt neben einer vereinfachten Fertigung eine vorteilhafte Krafteinleitung auf die Membran. Um der Lasche eine grössere Stabilität als der Membran zu verleihen, kann diese mit einer grösseren Stärke, respektive Dicke, als die Membran dimensioniert werden. In einer Ausführungsform kann die Abreisslasche weiterhin ein spezielles Greifforgan umfassen, welches es einem Anwender erleichtert die Abreisslasche richtig zu greifen um die innere Zone aus der äusseren Zone herauszutrennen. Das Greiforgan kann beispielsweise eine Öse sein, oder Elemente, wie angeformte Lamellen, Gitterstrukturen oder ähnliches, welche die Griffigkeit verbessern. Je nach Anwendungsgebiet kann jedoch insbesondere die innere Zone der Membran, bzw. die Abreisslasche zumindest bereichsweise aus der gleichen Materialkomponente wie der Dosenkörper bestehen.

Je nach Anwendungsgebiet und Ausgestaltung kann die umlaufende Dünnstelle über den Umfang der inneren Zone eine unterschiedliche Tiefe aufweisen. Bevorzugterweise, ist hierbei eine tiefste Stelle der umlaufenden Dünnstelle gleichzeitig als Einreissstelle vorgesehen, an der sich die innere Zone als erstes von der äusseren Zone löst. Die Einreissstelle ist hierbei mit Vorteil von einem Befestigungspunkt der Abreisslasche an der Membran aus in eine bevorzugte Abreissrichtung orientiert.

Eine solche bevorzugte Abreissrichtung wird dem Nutzer aus ergonomischen Gründen durch die Ausgestaltung der Abreisslasche nahelegt.

Je nach Ausführung kann es zudem sinnvoll sein, dass die äussere und/oder die innere Zone zumindest eine Versteifungsrippe ausweist. Bei der äusseren Zone unterstützt dies den Effekt, dass ein Einreissen möglichst vermieden wird und verstärkt zusätzlich die Halterung des einzuführenden Elektrorohres. Bei der inneren Zone kann die mindestens eine Versteifungsrippe ein einfacheres Heraustrennen der inneren Zone bewirken. Die Versteifungsrippe kann an die Membran angeformt sein und aus dem gleichen Material bestehen. Weiter kann die Versteifungsrippe an die Membran innen und/oder aussen angeordnete sein und bei Bedarf mit der Abreisslasche oder der Wulst gekoppelt sein. Ergänzend oder alternativ hierzu kann die Versteifungsrippe ebenfalls mit dem Rand der Rohröffnung verbunden sein. Die Versteifung kann hierbei durch eine lokale Verdickung des weichelastischen Materials der Membran erzeugt werden. Alternativ oder ergänzend hierzu kann die Versteifungsrippe ebenfalls aus dem oben beschriebenen harten Kunststoffmaterial bestehen, welches an die Membran angebracht wird.

### KURZE BESCHREIBUNG DER FIGUREN

Anhand der in den nachfolgenden Figuren gezeigten Ausführungsbeispiele und der dazugehörigen Beschreibung werden Aspekte der Erfindung näher erläutert. Es zeigen:
- Fig. 1: Eine erste Variante einer Installationsdose gemäss der Erfindung in einer perspektivischen Ansicht von unten;
- Fig. 2: die erste Variante der Installationsdose gemäss Figur 1 in einer perspektivischen Ansicht von oben;
- Fig. 3: die erste Variante der Installationsdose gemäss Figur 1 in einer Ansicht von unten;
- Fig. 4: die erste Variante der Installationsdose in einer geschnittenen Ansicht (F-F) gemäss Figur 3;
- Fig. 5: ein Detailausschnitt der ersten Variante der Installationsdose gemäss Figur 4;
- Fig. 6: eine zweite Variante der Installationsdose gemäss der Erfindung in einer perspektivischen Ansicht von unten;
- Fig. 7: ein Detailausschnitt D der zweiten Variante der Installationsdose gemäss Figur 6.

### BESCHREIBUNG DER AUSFÜHRUNGSFORMEN

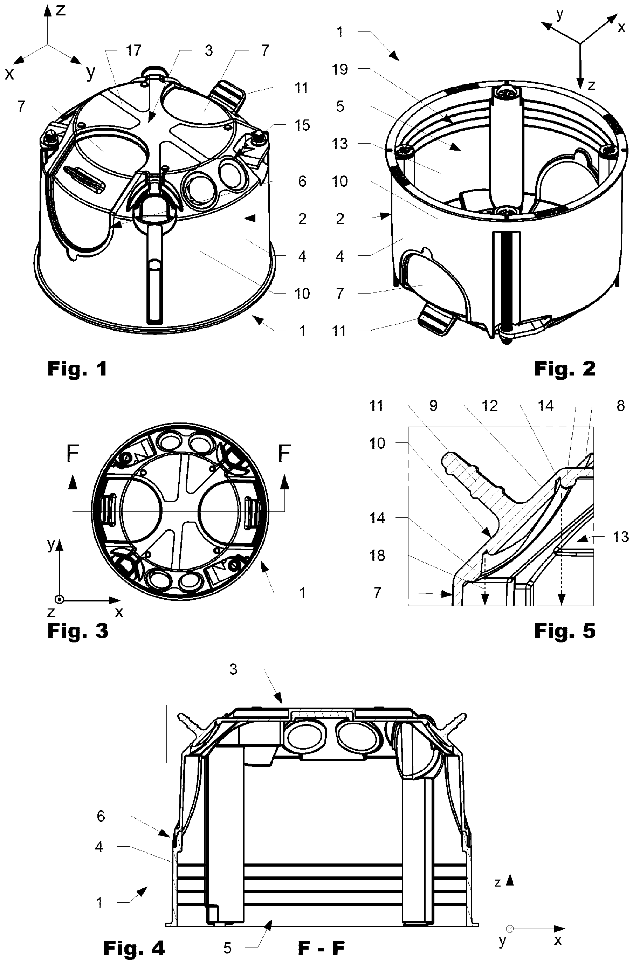

**Figur 1** bis **Figur 5** zeigen eine erste Variante einer erfindungsgemässen Installationsdose 1 für elektrotechnische Zwecke. Die Installationsdose 1 umfasst einen Dosenkörper 2 mit einem Dosenboden 3 und einer daran anschliessenden Dosenwand 4, welche einen Installationsraum 19 umgeben, welcher über eine dem Dosenboden 3 gegenüberliegende Installationsöffnung 5 zugänglich ist. Der Dosenkörper 2 weist in der gezeigten Variante weiter einen Übergangsbereich 15 auf, welcher zwischen dem Dosenboden 3 und der Dosenwand 4 ausgebildet ist.

Der Dosenkörper 2 weist zwei einander diametral gegenüber angeordnete Rohröffnungen 6 zum Einführen von Elektrorohren in den Installationsraum 19 auf. Diese Rohröffnungen 6 erstrecken sich in der gezeigten Variante vom Dosenboden 3 über den Übergangsbereich 15 in die Dosenwand 4 (andere Ausgestaltungen sind möglich). Die Rohröffnungen 6 sind von einer elastischen Membran 7 abgedeckt. Die Membranen 7 können zur einfacheren Herstellbarkeit wie gezeigt über Stege 17 aus dem gleichen elastischen Material miteinander verbunden sein, was eine gemeinsame Fertigung mittels Spritzgiessen ermöglicht. Die Stege 17 verlaufen oberflächlich über die Dosenaussenseite 10.

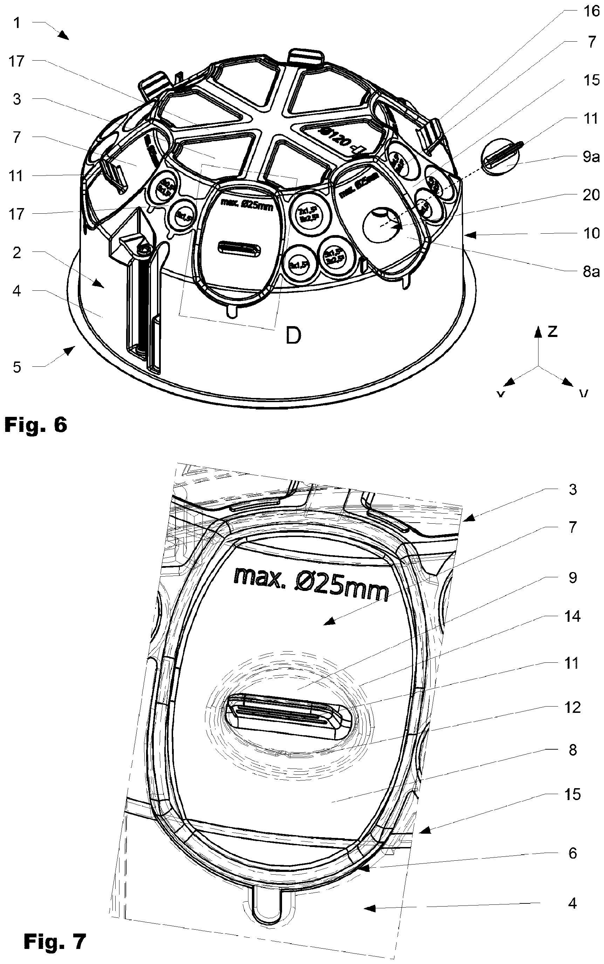

Wie insbesondere in den **Figuren 5** und **7** zu erkennen ist, weisen die Membranen 7 eine äussere und eine innere Zone 8, 9 auf. Hierbei umgibt die äussere Zone 8 die innere Zone 9. Zwischen der äusseren und der inneren Zone 8, 9 befindet sich weitergehend eine die innere Zone 9 umgebende umlaufende Dünnstelle 12. Aus der Detailansicht in **Figur 5** ist ersichtlich, dass die Dünnstelle 12 auf einer Innenseite 13 des Dosenkörpers 2 angebracht ist. Die Dünnstelle ist als eine Vertiefung in einer U-Form ausgestaltet, jedoch sind ebenfalls andere Formen denkbar. Weiterhin ist erkennbar, dass die äussere Zone 8 eine um die innere Zone 9 umlaufende Wulst 14 umfasst, welche entlang der Dünnstelle 12 verläuft. Die umlaufende Wulst 14 der äusseren Zone 8 ist ebenfalls an der Innenseite 13 der Membran, respektive des Dosenkörpers 2, angeordnet. Hierbei weist die Dünnstelle 12 zur besseren Entformbarkeit nach der Herstellung durch Spritzguss nach Möglichkeit keinen Hinterschnitt in Entformungsrichtung 18 (Richtung zur Installationsöffnung 5) auf. Das heisst, dass sich die Dünnstelle 12 mit Vorteil in die Entformungsrichtung 18 erstreckt. Auf der Dosenaussenseite 10 ist an die innere Zone 9 weiter eine Abreisslasche 11 angeformt. Die Abreisslasche 11 hat einen rechteckigen Querschnitt, erstreckt sich von der Dosenaussenseite 10 weg und ist zudem mit Vorteil mit einem Winkel zur Entformungsrichtung angeordnet. Die Ausgestaltung ist derart gewählt, dass die Abreisslasche 11 gut zwischen zwei Finger eines Benutzers greifbar ist. Weiterhin ist ein Greiforgan 16 in der Form von Lamellen an der Oberfläche der Abreisslasche 11 angebracht um eine bessere Griffigkeit zu erzeugen.

**Figur 6** zeigt eine zweite Variante einer erfindungsgemässen Installationsdose 1 in einer perspektivischen Ansicht von unten. Die abgebildete Installationsdose 1 unterscheidet sich in der Form des Dosenkörpers 2 sowie in der Anordnung der Rohröffnungen 6 über den Dosenkörper 2 von der zuvor beschriebenen ersten Variante der Installationsdose 1. Die breitere Form des Dosenkörpers 2 der zweiten Variante ermöglicht eine grössere Anzahl von Rohröffnungen 6, welche sich über den Umfang der Installationsdose 1 verteilen. Im gezeigten Fall haben die Rohröffnungen hierbei unterschiedliche Grössen und sind im Bereich des Übergangsbereiches zwischen Dosenboden 3 und Dosenwand verteilt. Die grösseren Rohröffnungen 6 sind hierbei mit einer Membran 7 mit einer äusseren und einer inneren Zone 8, 9 bespannt, wie zuvor beschrieben. Alle Membranen 7 sind weiterhin ebenfalls durch mindestens einen Steg 17 miteinander verbunden, identisch zu der ersten Variante.

Eine herausgetrennte innere Zone 9a mit einer darauf angeordneten Abreisslasche 11 ist dargestellt, welche entlang der umlaufenden Dünnstelle 12 aus der äusseren Zone 8a der Membran 7 herausgetrennt wurde. Auf der Innenseite 13 der Installationsdose 1 wird die derart gebildete Einführungsöffnung 20 in der äusseren Zone 8 durch eine umlaufende Wulst 14 umrandet und verstärkt, wie oben beschrieben (hier nicht sichtbar). **Figur 7** zeigt ein Detail der innen und der äusseren Zone 8, 9 gemäss **Figur 6****.** Durch die Darstellung der verdeckten Linien ist hier ersichtlich, dass die Dünnstelle 12 und die Wulst 14 an der Innenseite 13 der Membran 7 (innere Zone 8) angeordnet sind, während die Abreisslasche 11 an der Aussenseite 10 positioniert ist.

**LISTE DER BEZUGSZEICHEN**

| | | | |
|---|---|---|---|
| 1 | Installationsdose | 12 | Dünnstelle |
| 2 | Dosenkörper | 13 | Innenseite (Dose) |
| 3 | Dosenboden | 14 | Wulst |
| 4 | Dosenwand | 15 | Übergangsbereich |
| 5 | Installationsöffnung | 16 | Greiforgan |
| 6 | Rohröffnung | 17 | Stege |
| 7 | Membran | 18 | Entformungsrichtung |
| 8 | Äussere Zone | 19 | Installationsraum |
| 9 | Innere Zone | 20 | Einführungsöffnung |
| 10 | Aussenseite (Dose) | | |
| 11 | Abreisslasche | | |

## Patentansprüche

1. Installationsdose (1) für elektrotechnische Zwecke mit einem Dosenkörper (2) umfassend einen Dosenboden (3) und eine daran anschliessende Dosenwand (4), sowie eine dem Dosenboden (3) gegenüberliegende Installationsöffnung (5), wobei
a. der Dosenkörper (2) mindestens eine Rohröffnung (6) zum Einführen eines Elektrorohres umfasst, welche durch eine elastische Membran (7) verschlossen ist, wobei
b. die elastische Membran (7) zumindest eine äussere Zone (8) und eine von der äusseren Zone (8) umgebene, und zu dieser radial nach innen orientierte, heraustrennbare innere Zone (9) umfasst, welche auf der Dosenaussenseite (10) eine nach aussen vorstehende Abreisslasche (11) aufweist,
**dadurch gekennzeichnet, dass**
c. die äussere Zone (8) und die innere Zone (9) durch eine auf der Innenseite (13) des Dosenkörpers (2) angebrachte Dünnstelle (12) der Membran (7) getrennt sind, und
d. die äussere Zone (8) eine um die innere Zone (9) umlaufende und auf einer Membraninnenseite angeordnete Wulst (14) umfasst.

2. Installationsdose (1) gemäss Anspruch 1, **dadurch gekennzeichnet, dass** die auf der Innenseite (13) der Installationsdose (1) angeordnete umlaufende Wulst (14) der äusseren Zone (8) entlang der Dünnstelle (12) verläuft.

3. Installationsdose (1) gemäss einem der vorangehenden Ansprüche, **dadurch gekennzeichnet, dass** sich ein Querschnitt der Dünnstelle (12) in Richtung der Installationsöffnung (5) erstreckt.

4. Installationsdose (1) gemäss einem der vorangehenden Ansprüche, **dadurch gekennzeichnet, dass** die äussere und/oder die innere Zone (8, 9) zumindest eine Versteifungsrippe ausweist.

5. Installationsdose (1) gemäss einem der vorangehenden Ansprüche, **dadurch gekennzeichnet, dass** die umlaufende Dünnstelle (12) eine Kerbe ist.

6. Installationsdose (1) gemäss einem der vorangehenden Ansprüche, **dadurch gekennzeichnet, dass** die umlaufende Dünnstelle (12) über den Umfang der inneren Zone (9) eine unterschiedliche Tiefe aufweist.

7. Installationsdose (1) gemäss Anspruch 6, **dadurch gekennzeichnet, dass** die umlaufende Dünnstelle (12) mindestens eine Einreissstelle aufweist, welche der tiefsten Stelle der Dünnstelle (12) entspricht.

8. Installationsdose (1) gemäss Anspruch 7, **dadurch gekennzeichnet, dass** die mindestens eine Einreissstelle von einem Befestigungspunkt der Abreisslasche (11) an der Membran (7) aus in eine Abreissrichtung orientiert ist.

9. Installationsdose (1) gemäss einem der vorangehenden Ansprüche, **dadurch gekennzeichnet, dass** der Dosenboden (3) einen Übergangsbereich (15) aufweist, welche an die Dosenwand (4) angrenzt.

10. Installationsdose (1) gemäss Anspruch 9, **dadurch gekennzeichnet, dass** die innere Zone (9) der Membran (7) in dem Übergangsbereich (15) angeordnet ist.

11. Installationsdose (1) gemäss einem der vorangehenden Ansprüche, **dadurch gekennzeichnet, dass** die Abreisslasche (11) ein Greifforgan umfasst.

## Claims

1. Installation box (1) for electrotechnical purposes, having a box body (2) including a box base (3) and a box wall (4) adjacent to said box base, as well as an installation opening (5) arranged opposite the box base (3), wherein
a. the box body (2) includes at least one conduit opening (6) for inserting an electrical conduit, which conduit opening is closed by an elastic membrane (7), wherein
b. the elastic membrane (7) includes at least one outer zone (8) and a detachable inner zone (9) which is surrounded by the outer zone (8) and is oriented radially inwardly with respect to the said outer zone and, on the box outer side (10), comprises an outwardly projecting tear-off tab (11),
**characterized in that**
c. the outer zone (8) and the inner zone (9) are separated by a thin portion (12) of the membrane (7) attached to the inner side (13) of the box body (2), and
d. the outer zone (8) includes a bead (14) which encircles the inner zone (9) and is arranged on a membrane inner side.

2. Installation box (1) according to Claim 1, **characterized in that** the encircling bead (14) of the outer zone (8), which bead is arranged on the inner side (13) of the installation box (1), runs along the thin portion (12).

3. Installation box (1) according to either of the preceding claims, **characterized in that** a cross section of the thin portion (12) extends in the direction of the installation opening (5).

4. Installation box (1) according to one of the preceding claims, **characterized in that** the outer and/or the inner zone (8, 9) comprise/comprises at least one reinforcing rib.

5. Installation box (1) according to one of the preceding claims, **characterized in that** the encircling thin portion (12) is a notch.

6. Installation box (1) according to one of the preceding claims, **characterized in that** the encircling thin portion (12) exhibits a different depth over the circumference of the inner zone (9).

7. Installation box (1) according to Claim 6, **characterized in that** the encircling thin portion (12) comprises at least one tear point which corresponds to the lowest point of the thin portion (12).

8. Installation box (1) according to Claim 7, **characterized in that** the at least one tear point is oriented from a fastening point of the tear-off tab (11) on the membrane (7) in a tear-off direction.

9. Installation box (1) according to one of the preceding claims, **characterized in that** the box base (3) comprises a transition region (15) which adjoins the box wall (4).

10. Installation box (1) according to Claim 9, **characterized in that** the inner zone (9) of the membrane (7) is arranged in the transition region (15).

11. Installation box (1) according to one of the preceding claims, **characterized in that** the tear-off tab (11) includes a grip element.

## Revendications

1. Boîte d'installation (1) à usage électrotechnique comprenant un corps de boîte (2) pourvu d'un fond de boîte (3) et d'une paroi de boîte (4) se raccordant à celui-ci, ainsi que d'une ouverture d'installation (5) en regard du fond de boîte (3),
a. le corps de boîte (2) comprenant au moins une ouverture de tube (6) qui est destinée à l'insertion d'un tube électrique et est fermée par une membrane élastique (7),
b. la membrane élastique (7) comprenant au moins une zone extérieure (8) et une zone intérieure séparable (9) qui est entourée par la zone extérieure (8), qui est orientée vers l'intérieur radialement à celle-ci et qui comporte du côté extérieur (10) de la boîte une languette déchirable (11) saillant vers l'extérieur,
**caractérisée en ce que**
c. la zone extérieure (8) et la zone intérieure (9) sont séparées par une mince portion (12) de la membrane (7) qui est fixée sur le côté intérieur (13) du corps de boîte (2), et
d. la zone extérieure (8) comprenant un bourrelet (14) qui s'étend autour de la zone intérieure (9) et qui est disposé sur un côté intérieur de la membrane.

2. Boîte d'installation (1) selon la revendication 1, **caractérisée en ce que** le bourrelet circonférentiel (14) de la zone extérieure (8), qui est disposé sur le côté intérieur (13) de la boîte d'installation (1) s'étend le long de la mince portion (12).

3. Boîte d'installation (1) selon l'une des revendications précédentes, **caractérisée en ce qu'**une section transversale de la mince portion (12) s'étend en direction de l'ouverture d'installation (5).

4. Boîte d'installation (1) selon l'une des revendications précédentes, **caractérisée en ce que** la zone extérieure et/ou intérieure (8, 9) comporte au moins une nervure de rigidification.

5. Boîte d'installation (1) selon l'une des revendications précédentes, **caractérisée en ce que** la mince portion circonférentielle (12) est une encoche.

6. Boîte d'installation (1) selon l'une des revendications précédentes, **caractérisée en ce que** la mince portion circonférentielle (12) a une profondeur différente sur la circonférence de la zone intérieure (9) .

7. Boîte d'installation (1) selon la revendication 6, **caractérisée en ce que** la mince portion circonférentielle (12) comporte au moins une portion déchirable qui correspond à la portion la plus profonde de la mince portion (12).

8. Boîte d'installation (1) selon la revendication 7, **caractérisée en ce que** l'au moins une portion déchirable est orientée depuis un point de fixation de la languette déchirable (11) au niveau de la membrane (7) dans un sens de déchirure.

9. Boîte d'installation (1) selon l'une des revendications précédentes, **caractérisée en ce que** le fond de boîte (3) comporte une zone de transition (15) qui est adjacente à la paroi de boîte (4).

10. Boîte d'installation (1) selon la revendication 9, **caractérisée en ce que** la zone intérieure (9) de la membrane (7) est disposée dans la zone de transition (15) .

11. Boîte d'installation (1) selon l'une des revendications précédentes, **caractérisée en ce que** la languette déchirable (11) comprend un organe de préhension.
